# EUROPÄISCHE PATENTSCHRIFT

(11) **EP 3 830 613 B1**
(45) Veröffentlichungstag und Bekanntmachung des Hinweises auf die Patenterteilung: **25.11.2026**
(21) Anmeldenummer: 19753238.5
(22) Anmeldetag: 18.06.2019
(51) Int. Cl.: G02B 3/00, F21V 5/00, G02B 27/30

(54) **OPTISCHER KOLLIMATOR**
OPTICAL COLLIMATOR
COLLIMATEUR OPTIQUE

(30) Priorität: 01.08.2018 DE 102018118684
(43) Veröffentlichungstag der Anmeldung: 09.06.2021
(73) Patentinhaber: Ledlenser GmbH & Co. KG, 42699 Solingen (DE)
(72) Erfinder: DROSS, Oliver, 40721 Hilden (DE)
(74) Vertreter: RGTH
(86) Internationale Anmeldenummer: PCT/DE2019/100555
(87) Internationale Veröffentlichungsnummer: WO 2020/025079

(56) Entgegenhaltungen:
- WO-A1-2015/197731
- WO-A1-2015/197731
- WO-A2-2008/021082
- DE-A1- 10 051 464
- DE-A1- 10 051 464
- DE-A1- 102011 012 130
- DE-T2- 602004 004 078
- DE-T2- 602004 004 078
- US-A1- 2013 058 103

## Beschreibung

Die vorliegende Erfindung betrifft einen optischen Kollimator zur Fokussierung von Licht mittels mehrerer optischer Flächen, die als Lichteintrittsflächen und/oder Lichtaustrittsflächen und/oder Reflektionsflächen ausgebildet sind, die jeweils optische Grenzflächen mit einer Änderung der optischen Dichte bilden, wobei der Kollimator als TIR-Kollimator ausgebildet ist, mit einer Sammellinse, die eine rückwärtige Lichteintrittsfläche und eine frontwärtige Lichtaustrittsfläche besitzt, und einem Reflektorteil, der eine Lichteintrittsfläche, eine TIR-Reflektorfläche und eine Lichtaustrittsfläche besitzt, wobei der Reflektorteil die zentrale Sammellinse derart umgreift, dass der TIR-Kollimator eine rückwärtige Kavität besitzt, die durch die Lichteintrittsfläche der Sammellinse und die Lichteintrittsfläche des Reflektorteils begrenzt ist.

Derartige Kollimatoren sind aus dem Stand der Technik, insbesondere aus DE 10 2011 012 130 A1 und US 2013/0058103 A1, bekannt und dienen zur Bündelung von Licht, das von Lichtquellen abgestrahlt wird, wodurch die Beleuchtung individuellen Vorgaben angepasst werden kann. Insbesondere bei Taschen- und Kopflampen dienen solche Kollimatoren zur Fokussierung des abgestrahlten Lichtkegels.

Zur Erzeugung von großen Lichtströmen werden häufig mehrere dicht nebeneinander angeordnete Lichtquellen verwendet, wie beispielsweise vier zu einem Quadrat angeordnete LEDs oder LED Chips in einem LED Gehäuse. Damit liegt allerdings keine homogene Lichtquelle vor, wodurch sich insbesondere in Kombination mit einem vergleichsweise kleinen Kollimator eine inhomogene Beleuchtung ergibt. Unter einer homogenen Beleuchtung wird in der Beleuchtungsoptik eine gleichmäßige Verteilung der Beleuchtungsstärke auf einer Testoberfläche verstanden, die von der Beleuchtungsvorrichtung bestrahlt wird. Artefakte bei einer inhomogenen Beleuchtung, wie beispielsweise quadratische, punktförmige oder kreuzförmige Hell-Dunkel-Kontraste sind bei einer homogenen Beleuchtung für das menschliche Auge nicht sichtbar.

Zur Vermeidung derartiger Artefakte sind Diffusoren beziehungsweise Streuscheiben bekannt, die eine große Anzahl kleiner Streuzentren besitzen und die auf der den Lichtquellen abgewandten Seite des Kollimators angeordnet sind. Solche zusätzlichen Diffusoren sind jedoch nachteilbehaftet, weil sie bei der Herstellung und Montage zusätzliche Kosten verursachen und weil sie einen zusätzlichen Platzbedarf haben, der in kleinen und handlichen Taschen- und Kopflampen nur bedingt zur Verfügung steht.

Ferner ist es bekannt, die Lichtaustrittsflächen eines Kollimators als Diffusor auszubilden. Hierzu wird ein Teil oder die gesamte Lichtaustrittsfläche des Kollimators mattiert. Dies führt nachteiliger Weise zu einer gewissen Rückstreuung des Lichts, sodass die Effizienz gesenkt wird. Außerdem sind diffuse Strukturen schwierig zu spezifizieren und reproduzierbar zu fertigen, denn oft werden hierzu nicht deterministische Prozesse, wie Erodieren oder Ätzen angewendet.

Schließlich ist bekannt, auf der Lichtaustrittsfläche eines Kollimators konvexe Mikrolinsen anzuordnen, was insbesondere bei Zoomoptiken, bei denen der Abstand zwischen Kollimator und Lichtquelle variiert, zu Inhomogenitäten in der Lichtverteilung führen kann. Die Inhomogenitäten entstehen, weil die Mikrolinsen eine Fokalebene besitzen, die bei bestimmten Einstellungen des Kollimators in der Nähe der Lichtquelle angeordnet ist, wodurch Mehrfachbilder der Lichtquelle in das Fernfeld projiziert werden. Die Mehrfachbilder erzeugen eine kurzwellige Intensitätsmodulation, die selbst bei kleinen Amplituden vom menschlichen Auge wahrnehmbar ist. Auf einer Testoberfläche sind in einem solchen Fall in der Regel gitterförmige Hell-Dunkel-Kontraste erkennbar.

Zwar lässt sich dieses Problem zumindest teilweise durch die Verkleinerung der Mikrolinsen beheben, weil hierdurch die lichtstreuende Wirkung beibehalten aber die Brennweite der Mikrolinsen erniedrigt wird. Allerdings ist die Herstellung derart kleiner Mikrolinsen relativ aufwendig und die Anforderungen an das Werkzeug zur Herstellung der Mikrolinsen sind hoch.

Ein Kollimator mit Mikrolinsen auf der Lichtaustrittsfläche ist beispielsweise aus WO 2015/197731 A1 bekannt.

DE 60 2004 004 078 T2 offenbart ebenfalls einen Kollimator, an dessen Frontseite eine sacklochartige Vertiefung mit einer Bodenfläche ausgebildet sein kann, wobei die Bodenfläche konkave Mikrolinsen aufweisen kann und als Lichtaustrittsfläche ausgebildet ist.

WO 2008/021082 A1 offenbart einen zweistückigen Kollimator mit einer Streuscheibe an deren Lichteintrittsfläche Mikrolinsen ausgebildet sind.

Schließlich offenbart DE 100 51 464 A1 eine Stufenlinse mit einer optionalen Noppenstruktur an ihrer frontseitigen Lichtaustrittsfläche.

Hiervon ausgehend ist es die Aufgabe der vorliegenden Erfindung, die Nachteile des Standes der Technik zumindest teilweise zu beheben. Insbesondere soll ein Kollimator vorgeschlagen werden, mit dem eine homogene Beleuchtung auch bei der Verwendung mehrerer Lichtquellen möglich ist. Der Kollimator soll dabei kompakt ausgestaltet sein und kostenschonend herstellbar sein.

Diese Aufgabe wird durch den Kollimator nach Anspruch 1 gelöst, wonach erfindungsgemäß vorgesehen ist, dass der Kollimator als Spritzgießteil ausgebildet ist und eine Vielzahl von konkaven Mikrolinsen aufweist, wobei die konkaven Mikrolinsen auf der Lichteintrittsfläche der Sammellinse ausgebildet sind und durch eine Verteilung mit variabler optischer Auslegung gebildet werden, bei der die konkaven Mikrolinsen verschiedene Krümmungsradien und/oder unterschiedliche mittlere Durchmesser besitzen.

Die Fokalebenen der konkaven Mikrolinsen, die ins Fernfeld projiziert werden können, sind im Gegensatz zu den Fokalebenen der konvexen Mikrolinsen virtuell und befinden sich an der von der Lichtquelle abgewandten Seite. Hierdurch werden Artefakte durch Mehrfachabbildungen verhindert, während die Streueigenschaften der Mikrolinsen im Übrigen erhalten bleiben.

Bevorzugte Ausführungsformen der vorliegenden Erfindung werden im Folgenden und sowie in den Unteransprüchen beschrieben.

Der Kollimator ist als sogenannter TIR-Kollimator (Total Internal Reflection - Kollimator) ausgebildet. Der TIR-Kollimator besitzt eine zentrale Sammellinse, die eine rückwärtige Lichteintrittsfläche und eine frontwärtige Lichtaustrittsfläche aufweist. Die rückwärtige Lichteintrittsfläche kann plan, konkav oder konvex ausgebildet sein. Ferner besitzt der TIR-Kollimator einen Reflektorteil, der eine Lichteintrittsfläche, eine TIR-Reflektorfläche und eine Lichtaustrittsfläche besitzt, wobei der Reflektorteil die zentrale Sammellinse derart umgreift, dass der Kollimator eine rückwärtige Kavität besitzt, die durch die Lichteintrittsfläche der Sammellinse und die Lichteintrittsfläche des Reflektorteils begrenzt ist. Die konkaven Mikrolinsen eines derartigen TIR-Kollimators sind vorzugsweise auf der Lichtaustrittsfläche der Sammellinse und/oder der Lichteintrittsfläche des Reflektorteils und/oder der TIR-Reflektorfläche und/oder der Lichtaustrittsfläche des Reflektorteils ausgebildet. Weil die Sammellinse den größten Anteil an den in Rede stehenden Artefakten verursacht, ist es in den meisten Anwendungsfällen bereits ausreichend, wenn die Lichteintritts- oder Lichtaustrittsfläche der Sammellinse konkave Mikrolinsen aufweist. Ergänzend können die übrigen optischen Flächen in beliebiger Kombination ebenfalls konkave Mikrolinsen besitzen.

Nach einer bevorzugten Ausführungsform der vorliegenden Erfindung ist vorgesehen, dass auf mindestens einer optischen Fläche ohne konkave Mikrolinsen konvexe Mikrolinsen ausgebildet sind. Hierbei ist vorzugsweise vorgesehen, dass auf der Lichteintrittsfläche der Sammellinse konkave Mikrolinsen und auf der TIR-Reflektorfläche konvexe Mikrolinsen ausgebildet sind. Die Lichteintrittsfläche der Sammellinse kann insbesondere bei dieser Ausführungsform konkav ausgebildet sein, wobei ein Krümmungsradius vorgesehen ist, der deutlich größer ist, als der Krümmungsradius der konvexen Lichtaustrittsfläche der Sammellinse.

Damit die konkaven Mikrolinsen mit einfachen Mitteln und kostenschonend hergestellt werden können, sind sie im Wesentlichen kreisförmig ausgebildet oder besitzen polygonale Umfangslinien und weisen vorzugsweise einen mittleren Durchmesser von 0,4 mm bis 3 mm auf. Hierdurch ergibt sich bei der bevorzugten Anordnung von einheitlichen Mikrolinsen eine Mikrolinsendichte von 9 bis 625 Mikrolinsen/cm². Es ist allerdings auch in Abhängigkeit des Anwendungsfalls vorgesehen, dass Mikrolinsen mit unterschiedlichen Durchmessern angeordnet werden, was sich positiv auf die Streueigenschaften des Kollimators auswirken kann.

Die Mikrolinsen können sphärisch oder asphärisch ausgebildet sein, wobei sphärische Mikrolinsen einen Krümmungsradius R von vorzugsweise 0,3 mm bis 20 mm aufweisen. Dabei ist vorgesehen, dass die Tiefe T der Mikrolinsen zwischen 0,05 mm und 1 mm variiert.

Neben der Anordnung ungleichmäßig großer Mikrolinsen ist auch eine gleichmäßige oder ungleichmäßige Verteilung der konkaven und konvexen Mikrolinsen auf den optischen Flächen des Kollimators vorgesehen. Erfindungsgemäß ist eine Verteilung von Mikrolinsen mit variabler optischer Auslegung vorgesehen, nämlich Mikrolinsen mit verschiedenen Krümmungsradien und/oder unterschiedlichen mittleren Radien. Vorzugsweise sind die konkaven Mikrolinsen als asphärische Mikrolinsen ausgebildet. Ebenfalls ist eine bereichsweise oder flächendeckende Anordnung der Mikrolinsen vorgesehen.

Die beschriebenen Kollimatoren mit konkaven Mikrolinsen werden im Spritzgießverfahren hergestellt, wozu zu den Mikrolinsen korrespondierende konvexe Strukturen im Einspritzwerkzeug vorhanden sind, die direkt mittels Diamantdrehen, Hochgeschwindigkeitsfräsen oder vergleichbaren zerspanenden Verfahren eingebracht werden können. Dabei entstehen jedoch an den Kanten der Mikrolinsen Verrundungen, deren Größe vom Radius des eingesetzten Werkzeugs und anderen produktionstechnischen Parametern abhängig sind. Sofern die Verrundungen klein genug sind, wird die optische Funktion der Mikrolinsen hierdurch nicht signifikant beeinträchtigt.

Alternativ kann ein Negativ des Werkzeugs hergestellt werden, in dem die zu den Mikrolinsen korrespondierenden Strukturen konkav ausgebildet sind, womit sie für zerspanende Werkzeuge leicht zugänglich sind. In einem zweiten Schritt kann hiervon ein Werkzeug abgeformt werden, z.B. durch das galvanische Aufwachsen einer hinreichend dicken Nickelschicht, die anschließend von dem Negativ getrennt und nachbearbeitet wird. In dem Werkzeug sind dann die formgebenden Strukturen konvex und beim Abformen mit dem Dielektrikum entstehen Kollimatoren mit konkaven Mikrolinsen, an deren Rändern keine Verrundungen auftreten.

Konkrete Ausgestaltungen der vorliegenden Erfindung werden nachfolgend anhand der Figuren erläutert. Es zeigen:
- Fig. 1: eine Querschnittsdarstellung eines TIR-Kollimators nach dem Stand der Technik,
- Fig. 2a-f: mehrere Querschnittsdarstellungen eines erfindungsgemäßen Kollimators,
- Fig. 3: den Querschnitt einer konkaven Mikrolinse und
- Fig. 4a-c: unterschiedliche Verteilungen der Mikrolinsen.

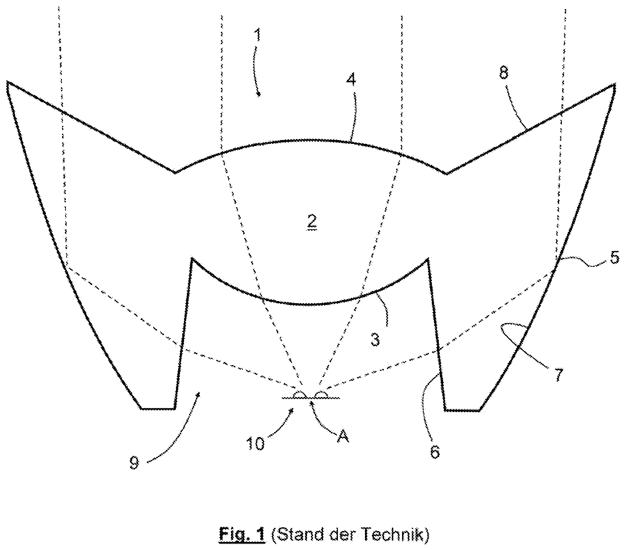

Fig. 1 zeigt einen TIR-Kollimator 1, wie er nach dem Stand der Technik bekannt ist. Solche TIR-Kollimatoren 1 besitzen eine zentrale Sammellinse 2, die durch eine hintere Lichteintrittsfläche 3 und eine vordere Lichtaustrittsfläche 4 definiert ist. Die zentrale Sammellinse 2 ist von einem Reflektorteil 5 umgriffen, der seitlich Lichteintrittsflächen 6, TIR-Reflektorflächen 7 und frontseitig Lichtaustrittsflächen 8 aufweist. Der Reflektorteil 5 umgreift dabei die zentrale Sammellinse 2 derart, dass der TIR-Kollimator 1 eine rückwärtige Kavität 9 besitzt, die durch die Lichteintrittsfläche 6 des Reflektorteils 5 und durch die Lichteintrittsfläche 3 der zentralen Sammellinse 2 begrenzt ist. Im montierten Zustand eines solchen TIR-Kollimators 1 befindet sich die Lichtquelle 10 innerhalb oder unterhalb der Kavität 9, so dass das abgestrahlte Licht der LED vollständig oder wenigstens zum größten Teil in den TIR-Kollimator 1 eindringt. Das Licht wird innerhalb des TIR-Kollimators 1 entweder in der zentralen Sammellinse 2 gebündelt oder an der TIR-Reflektorfläche 7 des Reflektorteils 5 totalreflektiert. Zur Erhöhung des Lichtstroms werden üblicherweise mehrere Lichtquellen 10 verwendet, zwischen denen ein geringfügiger Abstand A angeordnet ist. Hierdurch liegt keine homogene Lichtquelle 10 mehr vor und das abgestrahlte Licht weist Inhomogenitäten in Form von Hell-Dunkel-Kontrasten auf.

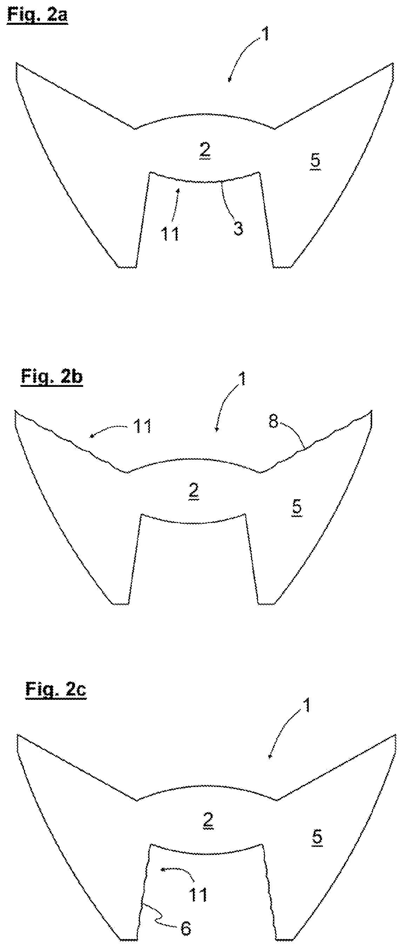

Um derartige Inhomogenitäten zu beheben, ist nach einer konkreten Ausgestaltung der vorliegenden Erfindung vorgesehen, konkave Mikrolinsen 11 an der Lichteintrittsfläche 3 der zentralen Sammellinse 2 anzuordnen. Hierdurch werden Mehrfachabbildungen verhindert und die dargelegten Inhomogenitäten werden vermieden. Fig. 2a zeigt einen solchen TIR-Kollimator 1, bei dem an der Lichteintrittsfläche 3 der zentralen Sammellinse 2 konkave Mikrolinsen 11 angeordnet sind.

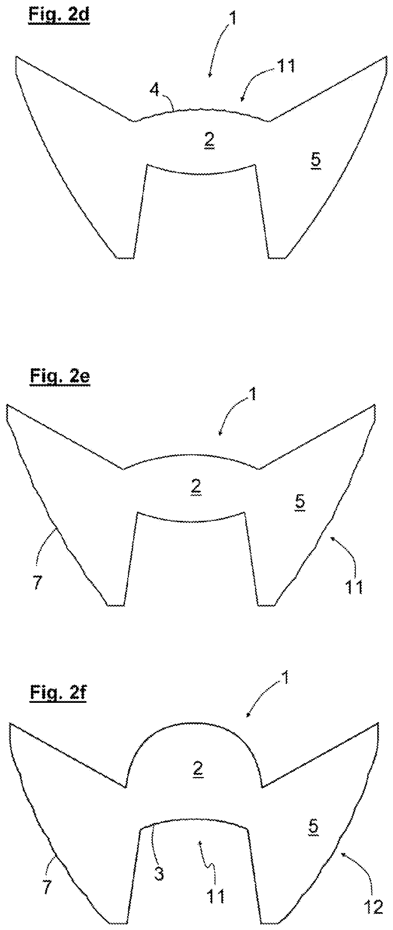

Die Fig. 2b-e zeigen alternative Ausgestaltungen, die nicht unter die Ansprüche fallen, bei denen andere optische Flächen des TIR-Kollimators 1 mit konkaven Mikrolinsen 11 versehen sind. Konkret sind die Mikrolinsen 11 auf der Lichtaustrittsfläche 8 des Reflektors 5 (Fig. 2b), der Lichteintrittsfläche 6 des Reflektorteils 5 (Fig. 2c), der Lichtaustrittsfläche 4 der Sammellinse 2 (Fig. 2d) und/oder der TIR-Reflektorfläche 7 (Fig. 2e) ausgebildet.

Fig. 2f zeigt eine besonders bevorzugte Ausgestaltung der Erfindung, bei der sich die Anordnung von konkaven Mikrolinsen 11 und konvexen Mikrolinsen 12 auf unterschiedlichen optischen Flächen mischen. Im dargestellten Ausführungsbeispiel sind die konkaven Mikrolinsen 11 auf einer konkaven Lichteintrittsfläche 3 der Sammellinse 2 ausgebildet, während die TIR-Reflektorfläche 7 konvexe Mikrolinsen 12 aufweist. Die Verwendung von konvexen Mikrolinsen 12 auf der TIR-Reflektorfläche 7 erzeugt in diesem Anwendungsbeispiel keine Inhomogenitäten und wird hier aus Gründen der einfacheren Produzierbarkeit des Werkzeugs bevorzugt.

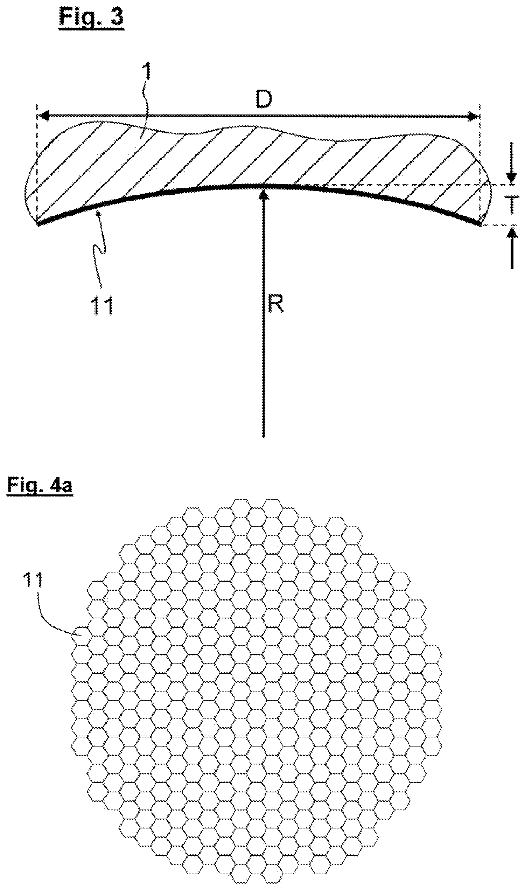

Fig. 3 zeigt ausschnittsweise den Querschnitt einer einzelnen konkaven Mikrolinse 11, die im Querschnitt im Wesentlichen teilkreisförmig ausgebildet ist. Die dargestellte Mikrolinse 11 besitzt einen mittleren Durchmesser D von 1 mm und einen Krümmungsradius R von 4 mm. Ferner weist die Mikrolinse eine Tiefe T von 0,03 mm auf.

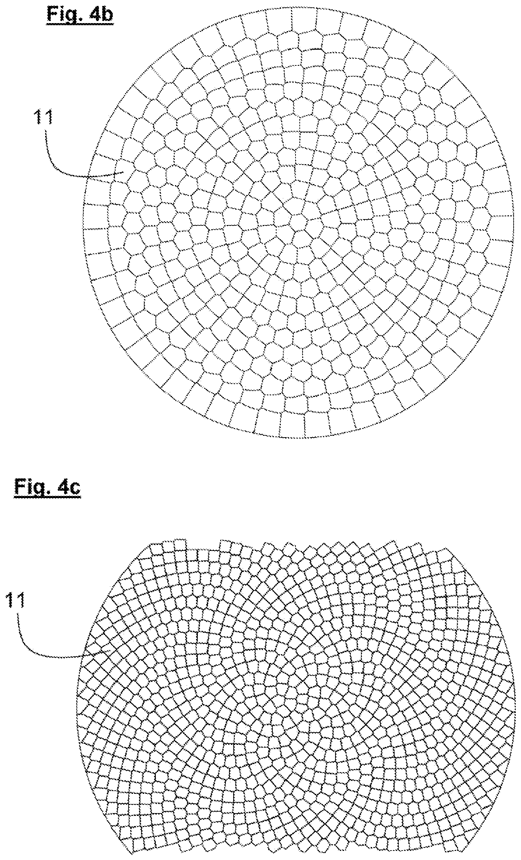

Die Mikrolinsen können gleichmäßig oder ungleichmäßig sowie bereichsweise oder flächendeckend auf der optischen Fläche verteilt sein. Die Fig. 4a-c zeigen bevorzugte Verteilungen von Mikrolinsen von durchschnittlich gleicher Größe. Konkret zeigt Fig. 4a eine hexagonale Verteilung von Mikrolinsen und Fig. 4b eine Verteilung von Mikrolinsen auf konzentrischen Kreisen. Fig. 4c zeigt eine Phyllotaxis-Verteilung.

## Patentansprüche

1. Kollimator (1) zur Fokussierung von Licht mittels mehrerer optischer Flächen, die als Lichteintrittsflächen (3, 6) und/oder Lichtaustrittsflächen (4, 8) und/oder Reflektionsflächen (7) ausgebildet sind, die jeweils optische Grenzflächen mit einer Änderung der optischen Dichte bilden, wobei der Kollimator (1) als TIR-Kollimator (1) ausgebildet ist, mit
• einer Sammellinse (2), die eine rückwärtige Lichteintrittsfläche (3) und eine frontwärtige Lichtaustrittsfläche (4) besitzt, und
• einem Reflektorteil (5), der eine Lichteintrittsfläche (6), eine TIR-Reflektorfläche (7) und eine Lichtaustrittsfläche (8) besitzt, wobei der Reflektorteil (5) die zentrale Sammellinse (2) derart umgreift, dass der TIR-Kollimator (1) eine rückwärtige Kavität (9) besitzt, die durch die Lichteintrittsfläche (3) der Sammellinse (2) und die Lichteintrittsfläche (6) des Reflektorteils (5) begrenzt ist,
**dadurch gekennzeichnet, dass**
der Kollimator (1) als Spritzgießteil ausgebildet ist und eine Vielzahl von konkaven Mikrolinsen (11) aufweist, wobei die konkaven Mikrolinsen (11) auf der Lichteintrittsfläche (3) der Sammellinse (2) ausgebildet sind und durch eine Verteilung mit variabler optischer Auslegung gebildet werden, bei der die konkaven Mikrolinsen (11) verschiedene Krümmungsradien und/oder unterschiedliche mittlere Durchmesser besitzen.

2. Kollimator (1) nach Anspruch 1, **dadurch gekennzeichnet, dass** die konkaven Mikrolinsen (11) auf der Lichteintrittsfläche (6) des Reflektorteils (5) und/oder der TIR-Reflektorfläche (7) und/oder der Lichtaustrittsfläche (4) der Sammellinse (2) und/oder der Lichtaustrittsfläche (8) des Reflektorteils (5) ausgebildet sind.

3. Kollimator (1) nach Anspruch 2, **dadurch gekennzeichnet, dass** auf mindestens einer optischen Fläche ohne konkave Mikrolinsen (11) konvexe Mikrolinsen (12) ausgebildet sind.

4. Kollimator (1) nach Anspruch 3, **dadurch gekennzeichnet, dass** auf der Lichteintrittsfläche (3) der Sammellinse (2) konkave Mikrolinsen (11) und auf der TIR-Reflektorfläche (7) konvexe Mikrolinsen (12) ausgebildet sind.

5. Kollimator (1) nach einem der Ansprüche 1 bis 4, **dadurch gekennzeichnet, dass** die konkaven Mikrolinsen (11) im wesentlich kreisförmig ausgebildet sind oder eine polygonale Begrenzung aufweisen und einen mittleren Durchmesser D von vorzugsweise 0,4 mm bis 3 mm besitzen.

6. Kollimator (1) nach einem der Ansprüche 1 bis 5, **dadurch gekennzeichnet, dass** die konkaven Mikrolinsen (11) sphärisch oder asphärisch ausgebildet sind, wobei sphärische Mikrolinsen (11) einen Krümmungsradius R von vorzugsweise 0,3 mm bis 100 mm aufweisen.

7. Kollimator (1) nach einem der Ansprüche 1 bis 6, **dadurch gekennzeichnet, dass** die konkaven Mikrolinsen (11) eine Tiefe T von 0,05 mm bis 1 mm aufweisen.

8. Kollimator (1) nach einem der Ansprüche 1 bis 7, **gekennzeichnet durch** eine gleichmäßige oder ungleichmäßige Verteilung der konkaven Mikrolinsen (11) auf den optischen Flächen des Kollimators (1).

9. Kollimator (1) nach einem der Ansprüche 1 bis 8, **dadurch gekennzeichnet, dass** die konkaven Mikrolinsen (11) als asphärische Mikrolinsen ausgebildet sind.

## Claims

1. Collimator (1) for focusing light by means of several optical surfaces that are formed as light-entry surfaces (3, 6) and/or light-exit surfaces (4, 8) and/or reflective surfaces (7), each of which forms an optical boundary surface with a change in optical density, wherein the collimator (1) is formed as a TIR collimator (1), with
• a converging lens (2) which possesses a rear light-entry surface (3) and a front light-exit surface (4), and
• a reflector part (5) which possesses a light-entry surface (6), a TIR reflector surface (7), and a light-exit surface (8), wherein the reflector part (5) surrounds the central converging lens (2) such that the TIR collimator (1) possesses a rear cavity (9) which is bounded by the light-entry surface (3) of the converging lens (2) and the light-entry surface (6) of the reflector part (5),
**characterized in that**
the collimator (1) is formed as an injection-molded part and has a plurality of concave microlenses (11), wherein the concave microlenses (11) are formed on the light-entry surface (3) of the converging lens (2) and are formed by an distribution with a variable optical design, in which the concave microlenses (11) possess different radii of curvature and/or different average diameters.

2. Collimator (1) according to claim 1, **characterized in that** the concave microlenses (11) are formed on the light-entry surface (6) of the reflector part (5) and/or the TIR reflector surface (7) and/or the light-exit surface (4) of the converging lens (2) and/or the light-exit surface (8) of the reflector part (5).

3. Collimator (1) according to claim 2, **characterized in that** convex microlenses (12) are formed on at least one optical surface without concave microlenses (11).

4. Collimator (1) according to claim 3, **characterized in that** concave microlenses (11) are formed on the light-entry surface (3) of the converging lens (2) and convex microlenses (12) are formed on the TIR reflector surface (7).

5. Collimator (1) according to one of claims 1 to 4, **characterized in that** the concave microlenses (11) are formed substantially circular or have a polygonal boundary and possess a mean diameter D of preferably 0.4 mm to 3 mm.

6. Collimator (1) according to one of claims 1 to 5, **characterized in that** the concave microlenses (11) are formed spherical or aspherical, wherein spherical microlenses (11) have a radius of curvature R of preferably 0.3 mm to 100 mm.

7. Collimator (1) according to one of claims 1 to 6, **characterized in that** the concave microlenses (11) have a depth T of 0.05 mm to 1 mm.

8. Collimator (1) according to one of claims 1 to 7, **characterized by** a uniform or non-uniform distribution of the concave microlenses (11) across the optical surfaces of the collimator (1).

9. Collimator (1) according to one of claims 1 to 8, **characterized in that** the concave microlenses (11) are formed as aspheric microlenses.

## Revendications

1. Collimateur (1) destiné à focaliser de la lumière au moyen de plusieurs surfaces optiques qui sont configurées comme des surfaces d'entrée de lumière (3, 6) et/ou des surfaces de sortie de lumière (4, 8) et/ou des surfaces de réflexion (7), qui forment chacune des interfaces optiques présentant une variation de la densité optique, le collimateur (1) étant conçu comme un collimateur TIR (1), comprenant
• une lentille convergente (2) qui possède une surface d'entrée de lumière arrière (3) et une surface de sortie de lumière avant (4), et
• une partie réflectrice (5) qui comporte une surface d'entrée de lumière (6), une surface de réflecteur TIR (7) et une surface de sortie de lumière (8), la partie réflectrice (5) entourant la lentille convergente centrale (2) de telle sorte que le collimateur TIR (1) présente une cavité arrière (9) délimitée par la surface d'entrée de lumière (3) de la lentille convergente (2) et la surface d'entrée de lumière (6) de la partie réflectrice (5),
**caractérisé en ce que**
le collimateur (1) est réalisé sous forme de pièce moulée par injection et comporte une multitude de microlentilles concaves (11), les microlentilles concaves (11) étant formées sur la surface d'entrée de lumière (3) de la lentille convergente (2) et sont formées selon une répartition à conception optique variable, dans laquelle les microlentilles concaves (11) présentent différents rayons de courbure et/ou différents diamètres moyens.

2. Collimateur (1) selon la revendication 1, **caractérisé en ce que** les microlentilles concaves (11) sont formées sur la surface d'entrée de lumière (6) de la partie réflectrice (5) et/ou de la surface de réflecteur TIR (7) et/ou de la surface de sortie de lumière (4) de la lentille convergente (2) et/ou de la surface de sortie de lumière (8) de la partie réflectrice (5).

3. Collimateur (1) selon la revendication 2, **caractérisé en ce que** des microlentilles convexes (12) sont formées sur au moins une surface optique dépourvue de microlentilles concaves (11).

4. Collimateur (1) selon la revendication 3, **caractérisé en ce que** des microlentilles concaves (11) sont formées sur la surface d'entrée de lumière (3) de la lentille convergente (2) et des microlentilles convexes (12) sont formées sur la surface de réflecteur TIR (7).

5. Collimateur (1) selon l'une des revendications 1 à 4, **caractérisé en ce que** les microlentilles concaves (11) ont une forme essentiellement circulaire ou présentent un contour polygonal et possèdent un diamètre moyen D compris de préférence entre 0,4 mm et 3 mm.

6. Collimateur (1) selon l'une des revendications 1 à 5, **caractérisé en ce que** les microlentilles concaves (11) sont de forme sphérique ou asphérique, des microlentilles sphériques (11) présentant un rayon de courbure R compris de préférence entre 0,3 mm et 100 mm.

7. Collimateur (1) selon l'une des revendications 1 à 6, **caractérisé en ce que** les microlentilles concaves (11) présentent une profondeur T comprise entre 0,05 mm et 1 mm.

8. Collimateur (1) selon l'une des revendications 1 à 7, **caractérisé par** une répartition uniforme ou non uniforme des microlentilles concaves (11) sur les surfaces optiques du collimateur (1).

9. Collimateur (1) selon l'une des revendications 1 à 8, **caractérisé en ce que** les microlentilles concaves (11) sont réalisées sous forme de microlentilles asphériques.
